## Europäisches Patentamt
## European Patent Office
## Office européen des brevets

(11) Veröffentlichungsnummer: **0 172 389**
**B1**

(12) **EUROPÄISCHE PATENTSCHRIFT**

(45) Veröffentlichungstag der Patentschrift:
**18.01.89**

(21) Anmeldenummer: **85108681.9**

(22) Anmeldetag: **11.07.85**

(51) Int. Cl.⁴: **G 01 N 21/88,** G 01 B 11/02,
H 01 L 31/02

(54) Vorrichtung zur Muster- und Lageerkennung von Objekten mit einer grossflächigen Fotodiodenzeile.

(30) Priorität: **25.07.84 DE 3427447**

(43) Veröffentlichungstag der Anmeldung:
**26.02.86 Patentblatt 86/9**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**DE-A- 2 440 283
FR-A- 2 379 812
GB-A- 1 489 931**

**MESSEN + PRÜFEN/AUTOMATIK, Band 13, Nr. 10,
Oktober 1977, Seiten 631-635; W. SCHRAMBÖCK:
"Berührungslos messen mit Halbleitersensoren"**

(73) Patentinhaber: **Siemens Aktiengesellschaft Berlin und
München, Wittelsbacherplatz 2, D-8000 München 2 (DE)**

(72) Erfinder: **Martin, Rolf, Dipl.-Ing., Karlstrasse 1,
D-8033 Planegg (DE)**
Erfinder: **Roth, Norbert, Dipl.-Ing., Ahornweg 8,
D-8196 Eurasburg (DE)**
Erfinder: **Froese-Peeck, Rüdiger, Dipl.-Ing.,
Höglwörtherstrasse 351, D-8000 München 70 (DE)**

## Beschreibung

Die Erfindung betrifft eine Vorrichtung zum Erkennen von Fehlern in der Oberfläche oder von Abmessungen eines Objekts sowie zum Erfassen der Lage eines Objektes mit einer sphärischen Optik und einer Fotodiodenzeile sowie einer an die Fotodiodenzeile angeschlossenen Auswerteschaltung.

Zur Erfassung der Lage oder der Beschaffenheit von Objekten werden in der Automatisierungstechnik in zunehmendem Masse visuelle Sensoren eingesetzt. Über ein optisches System werden die Bilder der Objekte auf einen Bildwandler projiziert und das hier entstehende elektrische Signal von einer Auswerteeinheit verarbeitet.

Generell besteht in der Automatisierungstechnik das Problem, dass das Umwandeln des optischen Bildes in elektrische Signale und die Verarbeitung dieser Signale in der Auswerteeinheit in kurzer Zeit erfolgen muss, da diese Zeit häufig unmittelbar die Gesamttaktzeit eines Automaten beeinflussen kann.

Die Bildaufnahme mit einer Fernsehkamera dauert in vielen Fällen zu lange (ein Halbbild in ca. 20 ms). Die Verarbeitung der Bildsignale einer Fernsehkamera, die an sich eine genügend hohe Auflösung hat, benötigt aber mit den heute üblichen rechnergestützten Auswerteeinheiten einige Hundert-Millisekunden bis einige Sekunden.

Als Prinzip einer schnellen Bildaufnahme wurde bereits die Abbildung des Objekts auf eine fotoempfindliche Fläche gewählt, die die Bildinformation zeilenförmig in elektrische Signale umwandelt. Bei dieser bekannten Vorrichtung (DE-PS 27 04 983) wird durch die anarmophotische Abbildung mit Zylinderlinsen das annähernd quadratische Bild eines Objektes auf ein langes und niedriges Bild umgewandelt, das die fotoempfindliche Fläche der Fotodiodenzeile überdeckt. Dabei hat jede der 128 Fotodioden die Grösse 0,05 mm × 0,42 mm.

Der Erfindung liegt die Aufgabe zugrunde, die eingangs beschriebene Vorrichtung mit einem Bildaufnehmer zu realisieren, der bei ausreichend hoher Auflösung das optische Bild in kurzer Zeit in elektrische Signale umwandelt. Darüber hinaus wird eine schnelle Auswerteschaltung benötigt.

Diese Aufgabe wird dadurch gelöst, dass eine Fotodiodenzeile mit annähernd quadratischer, fotoempfindlicher Fläche vorgesehen ist, auf der das Gesichtsfeld, das das Objekt enthält, über die sphärische Optik abgebildet wird und dass ferner aus einer in der Fotodiodenzeile vorgesehenen Anordnung die gleichzeitig an den einzelnen Fotodioden anstehenden elektrischen Signale, entstanden durch die Umwandlung des optischen Bildes, seriell zur Auswerteschaltung ausgelesen werden.

Die vom Bildwandler kommenden elektrischen Signale enthalten analoge Informationen über die Graustufen der zugeordneten Bildteile. Diese Analogwerte werden in der Auswerteschaltung zunächst mit einer A/D-Wandlung umgesetzt, so dass in den digitalen Werten die Information der Graustufen jeder Fotodiode enthalten ist. Diese digitalen Werte können nun mit der anschliessenden Auswerteschaltung zur Muster- und Lageerkennung ausgewertet werden.

Der wesentliche Vorteil der Lösung nach der Erfindung gegenüber der oben beschriebenen, bekannten Lösung besteht darin, dass keine Spezial-Optik mit Zylinderlinsen benötigt wird.

Ein weiterer, prinzipieller Vorteil von Fotodiodenzeilen gegenüber zum Beispiel einer Fernsehkamera ist die Möglichkeit, in wesentlich kürzerer Zeit die Bildinformation in die Auswerteelektronik einzulesen. Gegenüber der Dauer von ca. 20 Millisekunden einer Fernsehkamera (Halbbild) kann eine Fotodiodenzeile in etwa 0,15 ms (Takt 1 MHz) bis zu 0,015 ms (Takt 10 MHz) eingelesen werden.

Ausserdem bietet die spezielle, fast quadratische Fotodiodenzeile folgende Vorteile:
- bessere Ausleuchtung der Fotodioden (geringere Vignettierung durch die Abbildungsoptik),
- bessere Abbildungsqualität (weniger Linsenfehler) und
- höhere Lichtempfindlichkeit des Gesamt-Systems (weniger Lichtverluste durch weniger Glasdurchgänge).

Die Erfindung wird anhand der Figuren erläutert. Es zeigen:

Figur 1 in einer schematischen Darstellung die Projektion eines Objektes auf eine Fotodiodenzeile,

Figur 2 die Umwandlung des Objektbildes in elektrische Signale und

Figur 3 die prinzipielle Anordnungsmöglichkeit von Optik, Fotodiodenzeile und Auswerteelektronik.

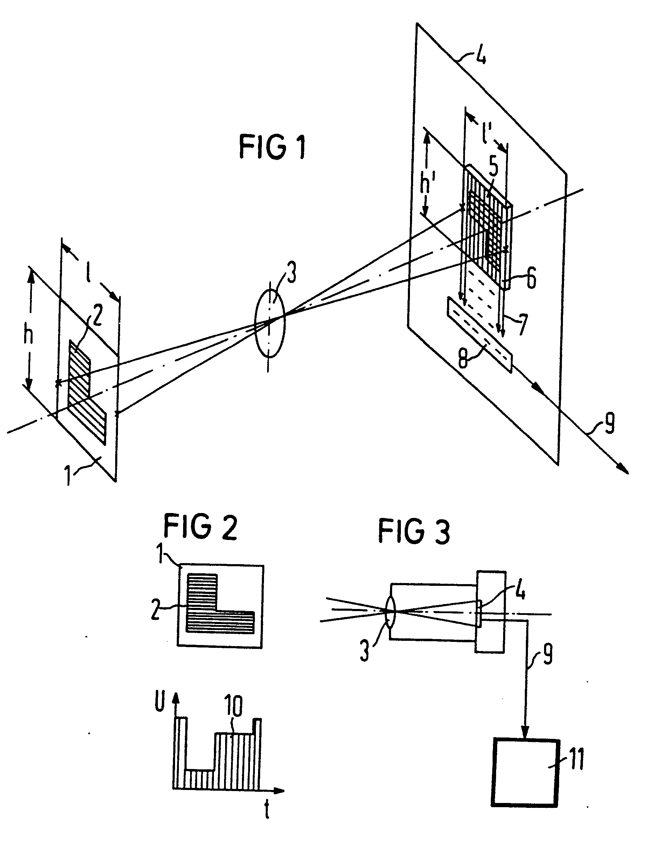

In der Figur 1 ist mit 1 ein Gesichtsfeld, mit 2 ein Objekt, mit 3 eine Optik und mit 4 eine Fotodiodenzeile mit einer fotoempfindlichen Fläche 5 bezeichnet. Die elektrische Information 7 einer Fotodiode 6 wird in einer Anordnung 8 in ein serielles Signal 9 umgewandelt.

Das Gesichtsfeld 1 mit den Abmessungen h, l wird durch die Optik 3 auf die fotoempfindliche Fläche 5 mit den Abmessungen h', l' übertragen. Durch die Optik 3 erfolgt eine sphärische Abbildung mit dem Abbildungsfaktor $n = h' : h = l' : l$. l' teilt sich in eine Anzahl z der Fotodioden auf.

Wenn ein Objekt 2 in der Form der Darstellung in der Figur 2 vorliegt, ergibt sich das darunter angeordnete zugehörige elektrische Signal. Mit 10 sind die Analogwerte der einzelnen Fotodioden markiert.

In der Figur 3 ist die Abbildung des Objektes 2 mit dem Gesichtsfeld 1 auf der Fotodiodenzeile 4 angedeutet. Das elektrische Signal 9 wird einer Auswerteelektronik 11 zugeführt.

## Patentanspruch

Vorrichtung zum Erkennen von Fehlern in der Oberfläche oder von Abmessungen eines Objekts (2), sowie zum Erfassen der Lage eines Objekts mit einer sphärischen Optik (3) und einer Fotodiodenzeile (4) sowie einer an die Fotodiodenzeile angeschlossenen Auswerteschaltung (11), dadurch gekennzeichnet, dass die Fotodiodenzeile (4) eine annähernd quadratische, fotoempfindliche Fläche aufweist, auf der ein Gesichtsfeld (1), das das Objekt (2) enthält, über die sphärische Optik (3) abgebildet wird und dass ferner aus einer in der Fotodiodenzeile vorgesehenen Anordnung (8), mit der gleichzeitig an den einzelnen Fotodioden anstehende elektrische Signale (7), entstanden durch die Umwandlung des optischen Bildes, seriell zur Auswerteschaltung (11) ausgelesen werden.

## Revendication

Dispositif pour reconnaître des défauts de la surface ou des dimensions d'un objet (2), ainsi que pour déterminer la position d'un objet, comprenant une optique sphérique (3) et une ligne de photodiodes (4), de même qu'un circuit d'exploitation (11) connecté à la ligne de photodiodes, caractérisé en ce que la ligne de photodiodes (4) présente une surface photosensible de forme à peu près carrée, sur laquelle est reproduite, au moyen de l'optique sphérique (3), un champ visuel (1) qui contient l'objet (2) et que, en outre, les signaux électriques (7), produits par la conversion de l'image optique et présents simultanément aux différentes photodiodes, sont lus en série dans un dispositif (8) prévu dans la ligne de photodiodes et sont transmis au circuit d'exploitation (11).

## Claim

Device for detecting faults in the surface or dimensions of an object (2), and for ascertaining the position of an object, using spherical optics (3) and a linear photodiode array (4) and an evaluating circuit (11) connected to the linear photodiode array, characterized in that the linear photodiode array (4) exhibits an approximately square photo-sensitive area on which a field of vision (1), which contains the object (2), is imaged via the spherical optics (3), and that, furthermore, the electrical signals (7), which are simultaneously present at the individual photodiodes and which have been produced by the conversion of the optical image, are serially read out of an arrangement (8), provided in the linear photodiode array, to the evaluating circuit (11).

1/1

FIG 1

FIG 2

FIG 3